# EUROPEAN PATENT APPLICATION

(11) **EP 4 723 079 A1**
(43) Date of publication of application: **08.04.2026**
(21) Application number: 23939690.6
(22) Date of filing: 01.06.2023
(51) Int. Cl.: G08G 1/16

(54) **ENVIRONMENT RECOGNITION DEVICE AND ENVIRONMENT RECOGNITION METHOD**

(71) Applicant: Astemo, Ltd., Chiyoda-ku, Tokyo 1000004 (JP)
(72) Inventor: HENMI, Kento, Hitachinaka-shi, Ibaraki 312-8503 (JP); USHIBA, Hiroyuki, Hitachinaka-shi, Ibaraki 312-8503 (JP)
(74) Representative: MERH-IP Matias Erny Reichl Hoffmann Patentanwälte PartG mbB
(86) International application number: PCT/JP2023/020457
(87) International publication number: WO 2024/247216

(57) **Abstract**

An environment recognition device includes: a three-dimensional object detection unit that sets a detection region for detecting an identification target for an image captured by an imaging unit, and detects a three-dimensional object appearing in the image on the basis of the detection region; a three-dimensional object size calculation unit that calculates the size of the three-dimensional object detected in the detection region using information on a distance from the own device to the three-dimensional object calculated from the image; a three-dimensional object identification unit that identifies that the three-dimensional object detected in the detection region is the identification target; and a lateral speed calculation unit that limits a sampling range of the three-dimensional object on the basis of the size of the three-dimensional object, and calculates movement information indicating that the three-dimensional object, which is the identification target, moves in a lateral direction on the basis of information on an edge of the three-dimensional object, which is the identification target.

## Description

### Technical Field

The present invention relates to an environment recognition device and an environment recognition method.

### Background Art

In recent years, with the spread of in-vehicle sensing devices, it is required to improve the performance of a collision safety function for pedestrians. As an evaluation of safety of automobiles (automobile assessment), a new car assessment programme (NCAP) has been formulated. Therefore, Euro NCAP, Japan NCAP, and the like are used for each region. All assessments are positively added or modified to automotive assessments. As new car assessment programs continue to evolve, it is necessary to cope with improvement in performance of the collision safety function. One example of performance evaluation of the collision safety function is evaluation of an automatic brake of a stepping-out pedestrian.

In order for the ECU mounted on the vehicle to determine the stepping out of the pedestrian, first, processing of identifying the pedestrian from the image captured by the in-vehicle camera and calculating the moving speed of the pedestrian in the lateral direction is performed. Next, the ECU executes autonomous emergency braking (AEB) when determining that the pedestrian is moving toward the own lane on the basis of the moving speed and the moving direction of the pedestrian.

PTL 1 discloses that "a contour line in which peak points of edges are continuous upward in an image is generated, the contour line is classified into a contour line group on the basis of a movement amount of the contour line in a horizontal direction between captured images, and whether or not a pedestrian having a high risk of stepping out into a route of the own vehicle is present is accurately determined on the basis of a movement amount of the contour line group in the horizontal direction and a size of the contour line group in a height direction".

### Citation List

### Patent Literature

PTL 1: JP 2012-203884 A

### Summary of Invention

### Technical Problem

Conventionally, the three-dimensional object identification processing performed by an electronic control unit (ECU) is based on the premise that the three-dimensional object is accurately detected, and the processing cost is reduced by maintaining the identification performance when the detection region of the three-dimensional object is identified. However, in practice, the three-dimensional object may not be accurately detected due to nighttime, colors of clothes and background, distance, and the like. For example, in a case where a utility pole, a sign pole, or the like exists near a pedestrian, a region larger than the actual size of the pedestrian may be detected.

There is a method of using the edge of the pedestrian in the detection region to calculate the lateral speed of the pedestrian. In the technique described in PTL 1, an edge (contour line) is extracted from an image, whether a three-dimensional object detected in a detection region is a pedestrian is determined on the basis of a size of the edge, and if a determination result is a pedestrian, a lateral speed of the pedestrian is calculated, and if the determination result is not a pedestrian, the object is treated as a non-pedestrian. However, the technique described in PTL 1 cannot extract an accurate edge depending on the background situation of the pedestrian. Therefore, there is a possibility that the edge is treated as a non-pedestrian and an accurate lateral speed is not calculated. In addition, in the method using the edge in the detection region, when a region larger than the actual size of the pedestrian is detected as described above, an erroneous lateral speed may be calculated for a stopped pedestrian. When an erroneous lateral speed is calculated in this manner, there is a problem that an alarm is issued or sudden brake control is performed even in a situation where there is no risk of stepping out in the vehicle control processing of the ECU.

The present invention has been made in view of such a situation, and an object thereof is to accurately calculate movement information of a three-dimensional object which is the identification target.

### Solution to Problem

An environment recognition device according to the present invention includes: a three-dimensional object detection unit that sets a detection region for detecting an identification target for an image captured by an imaging unit, and detects a three-dimensional object appearing in the image on the basis of the detection region; a three-dimensional object size calculation unit that calculates the size of the three-dimensional object detected in the detection region using information on a distance from the own device to the three-dimensional object calculated from the image; a three-dimensional object identification unit that identifies that the three-dimensional object detected in the detection region is the identification target; and a movement information calculation unit that limits a sampling range of the three-dimensional object on the basis of the size of the three-dimensional object, and calculates movement information indicating that the three-dimensional object, which is the identification target, moves in a lateral direction on the basis of information on an edge of the three-dimensional object, which is the identification target.

### Advantageous Effects of Invention

According to the present invention, by limiting the sampling range of the three-dimensional object on the basis of the size of the three-dimensional object, the movement information of the three-dimensional object which is the identification target can be accurately calculated even when the detection of the three-dimensional object is unstable.

### Brief Description of Drawings

[FIG. 1] FIG. 1 is a block diagram illustrating an overall configuration example of an in-vehicle stereo camera device according to a first embodiment of the present invention.
[FIG. 2] FIG. 2 is a flowchart and a configuration diagram illustrating an example of processing performed by each functional unit of the in-vehicle stereo camera device according to the first embodiment of the present invention.
[FIG. 3] FIG. 3 is a flowchart showing an example of processing for calculating a lateral speed of a three-dimensional object on which the present invention is based.
[FIG. 4] FIG. 4 is a view showing a result of the three-dimensional object detected in the three-dimensional object detection processing on the basis of the camera image according to the first embodiment of the present invention.
[FIG. 5A] FIG. 5A is a diagram illustrating an example of a right edge of a pedestrian appearing in a detection region.
[FIG. 5B] FIG. 5B is a diagram illustrating an example of a lateral position average of a right edge calculated from an image of a t-th frame.
[FIG. 5C] FIG. 5C is a diagram illustrating an example of a lateral position average of a right edge calculated from an image of a (t+1)-th frame.
[FIG. 6A] FIG. 6A is a diagram illustrating an example of a detection result in a case where a non-target object exists near a pedestrian.
[FIG. 6B] FIG. 6B is a diagram illustrating an example of a detection result of a second frame.
[FIG. 6C] FIG. 6C is a diagram illustrating an example of a movement amount of a lateral position average.
[FIG. 7A] FIG. 7A is an example of a detection region including a pedestrian.
[FIG. 7B] FIG. 7B is an enlarged view of the right side portion of the pedestrian photographed in the second frame.
[FIG. 8A] FIG. 8A is a diagram illustrating an example of a detection region including a pedestrian.
[FIG. 8B] FIG. 8B is a diagram illustrating an example in which a detection region larger than a target is acquired.
[FIG. 9] FIG. 9 is a flowchart illustrating an example of detailed processing of the three-dimensional object identification processing according to the first embodiment of the present invention.
[FIG. 10] FIG. 10 is a block diagram illustrating a hardware configuration example of a computer according to the first embodiment of the present invention.
[FIG. 11] FIG. 11 is a block diagram illustrating a configuration example of an in-vehicle camera device according to a second embodiment of the present invention.

### Description of Embodiments

Hereinafter, embodiments of the present invention will be described with reference to the accompanying drawings. In the present specification and the drawings, components having substantially the same function or configuration are denoted by the same reference numerals, and redundant description is omitted. The present invention is applicable to, for example, an arithmetic device for vehicle control with which an advanced driver assistance system (ADAS) or an in-vehicle electronic control unit (ECU) for autonomous driving (AD) can communicate.

### [First Embodiment]

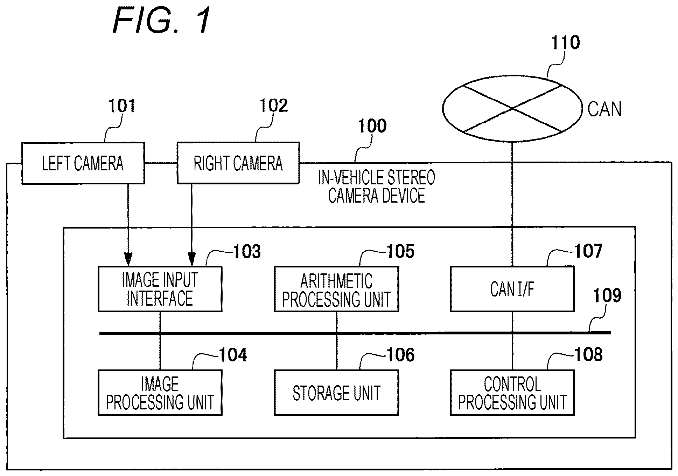

FIG. 1 is a block diagram illustrating an overall configuration example of an in-vehicle stereo camera device 100 according to a first embodiment of the present invention.

The in-vehicle stereo camera device 100 is an example of an environment recognition device that is mounted on a vehicle (not illustrated) and recognizes the outside environment on the basis of image information obtained by imaging the front of the vehicle, which is the traveling direction of the vehicle, as an imaging target region. The in-vehicle stereo camera device 100 identifies, for example, a white line of a road, a pedestrian, a vehicle, other three-dimensional objects, a signal, a sign, a lighting lamp, and the like on the basis of the image information. In addition, the in-vehicle stereo camera device 100 adjusts the brake, steering adjustment, and the like of the vehicle (hereinafter referred to as "own vehicle") on which the in-vehicle stereo camera device 100 is mounted on the basis of the result of identifying the external environment of the vehicle. The in-vehicle stereo camera device 100 calculates movement information (moving speed, moving distance, or moving direction) of a pedestrian moving in the lateral direction to safely control the own vehicle. In the following description, a direction in which a pedestrian moves across a front of a vehicle on which the own device (in-vehicle stereo camera device 100) is mounted or an own lane on which the vehicle travels is referred to as a "lateral direction". The lateral direction may be a direction orthogonal to the traveling direction of the own vehicle or the direction of the own lane, or may be an oblique direction.

The in-vehicle stereo camera device 100 includes a left camera 101, a right camera 102, an image input interface 103, an image processing unit 104, an arithmetic processing unit 105, a storage unit 106, a controller area network (CAN) interface 107, a control processing unit 108, and an internal bus 109.

The left camera 101 and the right camera 102 are respectively disposed on the left and right of the own vehicle, and capture an image of an environment in front of the own vehicle by an imaging element mounted on each camera to acquire image information. In the following description, the left camera 101 and the right camera 102 are also referred to as a "stereo camera" and an "imaging unit". Further, image information output from the imaging element of the stereo camera is simply referred to as an "image". The imaging unit (left camera 101 and right camera 102) is a stereo camera having two imaging elements. In FIG. 1, the stereo camera includes two cameras: a left camera 101 and a right camera 102, each including one imaging element. However, even in a case where one camera has two imaging elements arranged in the horizontal direction, the camera may be treated as a stereo camera.

The image input interface 103 is connected to an imaging element of the stereo camera. Then, the image input interface 103 controls the imaging operation of the stereo camera to capture an image captured by the stereo camera. The image data captured through the image input interface 103 is sent to each unit through the internal bus 109. Then, predetermined processing is performed on the image data by the image processing unit 104 and the arithmetic processing unit 105, and a result of the processing, image data as a final result, and the like are stored in the storage unit 106.

The image processing unit 104 compares the first image obtained from the imaging element of the left camera 101 with the second image obtained from the imaging element of the right camera 102, and performs image correction such as correction of a device-specific deviation caused by the imaging element and noise interpolation on each image. In addition, the image processing unit 104 stores the corrected image in the storage unit 106. Furthermore, the image processing unit (image processing unit 104) calculates the parallax of the three-dimensional object on the basis of the first image and the second image input from each of the left and right imaging elements. At this time, the image processing unit 104 calculates a corresponding portion between the first and second images to calculate parallax information. Thereafter, the image processing unit 104 stores the parallax information in the storage unit 106, similarly to the processing of storing the corrected image in the storage unit 106. In the following description, when the first image and the second image are not distinguished from each other, they are abbreviated as "images".

The arithmetic processing unit 105 uses the image (image captured by the left camera 101 or the right camera 102) and the parallax information (distance information between points on the image) stored in the storage unit 106 to perform identification processing of various three-dimensional objects necessary for identifying the environment around the vehicle. As the various three-dimensional objects, for example, a three-dimensional object such as a person, a car, other obstacles, a traffic light, a sign, a tail lamp of a car, or a headlight is assumed. These identification results by the arithmetic processing unit 105 and a part of the intermediate calculation result are stored in the storage unit 106. The control processing unit 108 calculates the control of the vehicle using the identification result of the image stored in the storage unit 106.

In the control processing unit 108, the arithmetic processing unit 105 calculates a control policy of the vehicle using the image and the identification results of various three-dimensional objects. A control policy of the vehicle obtained as a result of calculation by the control processing unit 108 and a part of identification results of various three-dimensional objects by the arithmetic processing unit 105 are transmitted to the in-vehicle network CAN 110 through the CAN interface 107, and braking of the vehicle is performed by an accelerator, a brake, or the like (not illustrated). Regarding these operations, the control processing unit 108 monitors whether or not each processing unit has caused an abnormal operation, whether or not an error has occurred at the time of data transfer, and the like, thereby preventing an abnormal operation.

The image processing unit 104 is connected to the image input interface 103, the arithmetic processing unit 105, the storage unit 106, and the control processing unit 108 via an internal bus 109. Further, the image processing unit 104 is connected to the CAN interface 107 of the in-vehicle network CAN 110 outside the in-vehicle stereo camera device 100 via the internal bus 109. As will be described later, the control processing unit 108, the image processing unit 104, the arithmetic processing unit 105, the storage unit 106, and the CAN interface 107 are configured by a single or a plurality of computer units.

The storage unit 106 includes, for example, a memory that stores an image processed by the image processing unit 104, a scanning result obtained by scanning the image by the arithmetic processing unit 105, and the like.

The CAN interface 107 inputs and outputs data to and from an external in-vehicle network. Therefore, the CAN interface 107 outputs the information output from the in-vehicle stereo camera device 100 to a control system (not illustrated) of the own vehicle via the in-vehicle network CAN 110.

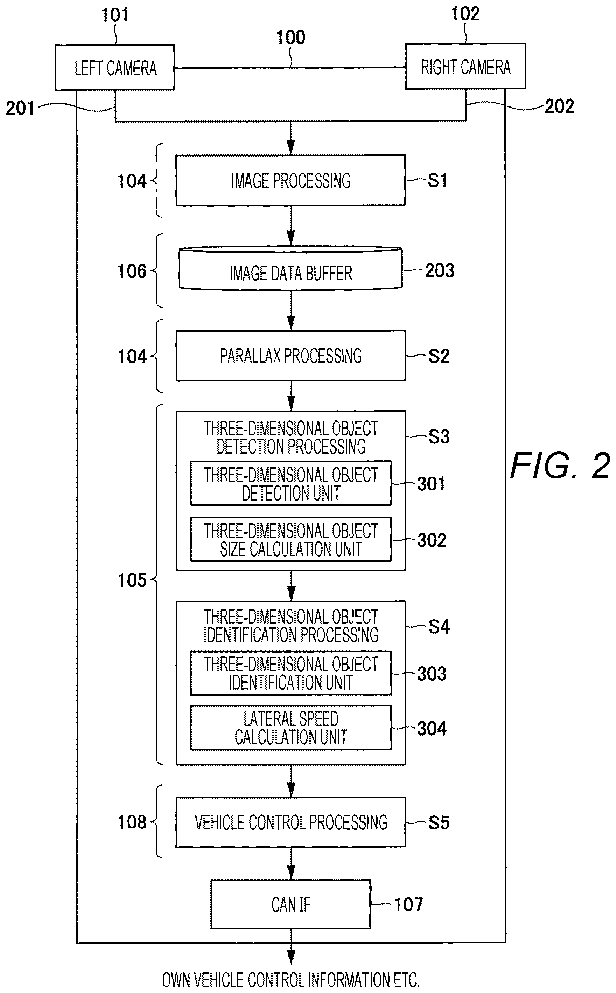

FIG. 2 is a flowchart and a configuration diagram illustrating an example of processing performed by each functional unit of the in-vehicle stereo camera device 100. FIG. 2 illustrates image recognition processing as an example of an environment recognition method performed by the in-vehicle stereo camera device 100. Each processing illustrated in FIG. 2 will be described in association with a reference sign of each functional unit illustrated in FIG. 1.

First, an image is captured by a stereo camera (left camera 101 and right camera 102) of the in-vehicle stereo camera device 100. The image processing unit 104 performs image processing (S1) such as correction for absorbing a unique habit of the imaging element of the stereo camera for each of the image data 201 captured by the left camera 101 and the image data 202 captured by the right camera 102. The result of the image processing is stored in the image data buffer 203. The image data buffer 203 is provided in the storage unit 106 in FIG. 1 and has a function of temporarily storing data related to an image.

Next, the image processing unit 104 collates the two corrected images read from the image data buffer 203. At this time, the image processing unit 104 performs parallax processing (S2) for obtaining parallax information of the images (referred to as "left and right images") output from the imaging elements of the stereo camera by collating the two images. The parallax information of the left and right images makes it clear where a certain point of interest on the three-dimensional object corresponds to on the image of the stereo camera, and the distance to the object can be obtained by the principle of triangulation.

As described above, the image processing (S1) and the parallax processing (S2) are performed by the image processing unit 104 in FIG. 1, and the finally obtained processed image, parallax information, and distance to the object are stored in the storage unit 106.

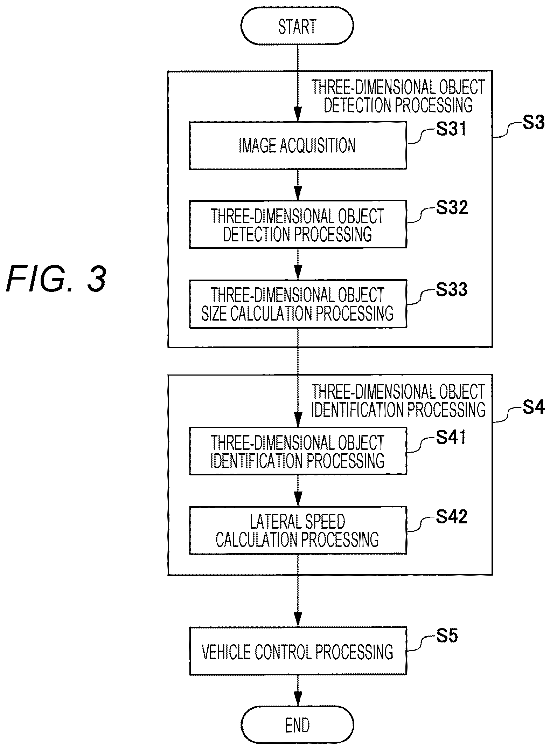

Next, the three-dimensional object detection unit 301 of the arithmetic processing unit 105 performs three-dimensional object detection processing (S3) for detecting a three-dimensional object in a three-dimensional space using the parallax information obtained in the parallax processing (S2). In the three-dimensional object detection processing (S3), processing of detecting a three-dimensional object having the same distance from the vehicle on which the own device and the stereo camera are mounted to the three-dimensional object is performed by the three-dimensional object detection unit (three-dimensional object detection unit 301). As illustrated in FIG. 3 to be described later, the three-dimensional object detection processing (S3) includes processing of calculating the size of the three-dimensional object by the three-dimensional object size calculation unit 302 in addition to the image acquisition processing (S31) by the three-dimensional object detection unit 301 and the three-dimensional object detection processing (S32).

In the three-dimensional object detection processing (S3), the three-dimensional object detection unit (three-dimensional object detection unit 301) acquires an image captured by the imaging unit (left camera 101 and right camera 102), sets a detection region for detecting an identification target for the image, and detects a three-dimensional object appearing in the image on the basis of the detection region (S31 and S32 in FIG. 3). The three-dimensional object size calculation unit (three-dimensional object size calculation unit 302) calculates the size of the three-dimensional object detected in the detection region using information on a distance from the own device to the three-dimensional object calculated from the image (S33 in FIG. 3).

Next, the three-dimensional object identification unit 303 of the arithmetic processing unit 105 performs a three-dimensional object identification processing (S4) using the image, the parallax information, and the distance to the object stored in the storage unit 106. Examples of the three-dimensional object which is the identification target in the three-dimensional object identification processing (S4) include a person, a car, other three-dimensional objects, a sign, a traffic light, a tail lamp, and the like. Details of the three-dimensional object identification processing (S4) are determined by constraints such as target characteristics and processing time available on the system. The three-dimensional object identification processing (S4) includes three-dimensional object identification processing (S41) by the three-dimensional object identification unit 303 illustrated in FIG. 3 described later, and lateral speed calculation processing (S42) by the lateral speed calculation unit 304.

In the three-dimensional object identification processing (S4), the three-dimensional object identification unit (three-dimensional object identification unit 303) identifies that the three-dimensional object detected in the detection region is an identification target (S41). The three-dimensional object identified as the object which is the identification target by the three-dimensional object identification unit (three-dimensional object identification unit 303) has the same distance in the two images. The three-dimensional object identification unit (three-dimensional object identification unit 303) identifies that the three-dimensional object is the identification target on the basis of the images of a plurality of consecutive frames. The three-dimensional object identification unit 303 can identify the three-dimensional object as a pedestrian which is the identification target by a posture when a person walks, pattern matching of a shape of the person, or the like.

The movement information calculation unit (lateral speed calculation unit 304) limits a sampling range of the three-dimensional object on the basis of the size of the three-dimensional object (pedestrian), and calculates movement information (lateral speed) (S42) indicating that the three-dimensional object, which is the identification target, moves in a lateral direction on the basis of information on an edge of the three-dimensional object, which is the identification target. Here, the movement information calculation unit (lateral speed calculation unit 304) calculates, as the information on the edge for each of the frames, an average value of horizontal coordinates of points obtained by sampling an edge of the three-dimensional object, and calculates, as the movement information, a speed of the three-dimensional object, which is the identification target, in a lateral direction.

Note that the movement information calculation unit (lateral speed calculation unit 304) samples one of left and right edges of the three-dimensional object (pedestrian) and calculates an average value of horizontal coordinates of points obtained by sampling the edges. For example, the lateral speed calculation unit 304 samples the edge in a range from a side closer to the road surface (for example, the toe or the heel) to a side farther from the road surface (for example, the head, a hat, or the like) in the three-dimensional object. When the identification target is a motorcycle, the edge is sampled in the range of the wheel of the motorcycle closer to the road surface, and the edge is sampled in the range of the helmet farther from the road surface. In addition, in a country of left-hand traffic, the right edge of the pedestrian is sampled, and in a country of right-hand traffic, the left edge of the pedestrian is sampled. However, the lateral speed calculation unit 304 may arbitrarily change the edge to be sampled to the right side or the left side according to the direction in which the three-dimensional object (pedestrian) which is the identification target is predicted to step out into the own lane.

Next, the control processing unit 108 performs vehicle control processing (S5) in consideration of the identification result of the three-dimensional object and the state of the own vehicle (Speed, steering angle, etc.). With this vehicle control processing (S5), the control processing unit 108 issues a warning to the occupant of the vehicle, for example, and performs braking such as braking and steering angle adjustment of the own vehicle. Furthermore, the control processing unit 108 determines a policy of performing avoidance control of the object by braking, and outputs the result to the in-vehicle network CAN 110 through the CAN interface 107.

The three-dimensional object identification processing (S4) shown in FIG. 2 is performed by the arithmetic processing unit 105 of FIG. 1, and the vehicle control processing (S5) is performed by the control processing unit 108 of FIG. 1. The output to the in-vehicle network CAN 110 is performed by the CAN interface 107. Each processing and each functional unit are configured by, for example, a single or a plurality of computer units, and are configured to be able to exchange data with each other.

In addition, the parallax or the distance in each pixel of the left and right images is obtained by the parallax processing (S2) performed by the image processing unit 104. Therefore, in the three-dimensional object detection processing (S3) performed by the three-dimensional object detection unit 301, pixels having the same parallax or distance are grouped as three-dimensional objects in a three-dimensional space. Note that, in the three-dimensional object detection processing (S3), since the type of the three-dimensional object is not detected, in a case where a person stands near a tree, the tree and the person may be grouped together. Furthermore, in a case where a plurality of persons stand at the same distance, the plurality of persons may be grouped together. After the three-dimensional object detection processing (S3), the three-dimensional object identification processing (S4) is performed on the basis of the position on the image and the detection region for detecting the three-dimensional object.

FIG. 3 is a flowchart showing an example of processing for calculating a lateral speed of a three-dimensional object on which the present invention is based. Here, the processing will be described focusing on the three-dimensional object detection processing (S3), the various identification processing (S4), and the vehicle control processing (S5) illustrated in FIG. 2.

First, the three-dimensional object detection unit 301 acquires an image obtained from the stereo camera or the monocular camera from the image data buffer 203 (S31). Next, the three-dimensional object detection unit 301 detects a three-dimensional object appearing in the image (S32). Next, the three-dimensional object size calculation unit 302 calculates the three-dimensional object size (S33) of the detected three-dimensional object.

Next, the three-dimensional object identification unit 303 performs identification processing (S41) of the detected three-dimensional object, and determines whether or not the three-dimensional object is a pedestrian which is the identification target. When the three-dimensional object is a pedestrian, the lateral speed calculation unit 304 calculates the lateral speed (S42) of the pedestrian. Next, the control processing unit 108 performs a vehicle control processing (S5) and ends this processing.

The lateral speed calculated in step S42 is a speed in the x direction when the longitudinal axis of the own vehicle is the z axis and the left and right axis of the own vehicle is the x axis, and is a lateral component of the relative speed of the pedestrian with respect to the own vehicle. When a pedestrian is present on the own lane or when it is determined that a pedestrian present outside the own lane moves at the lateral speed obtained above and steps out into the own lane, an alarm or brake control is performed in the vehicle control processing (S16) to assist the safety of the driver and the pedestrian.

### <Description of Processing of Calculating Lateral Speed of Pedestrian>

Next, an example of processing of calculating the lateral speed of the pedestrian using the image obtained from the stereo camera will be described.

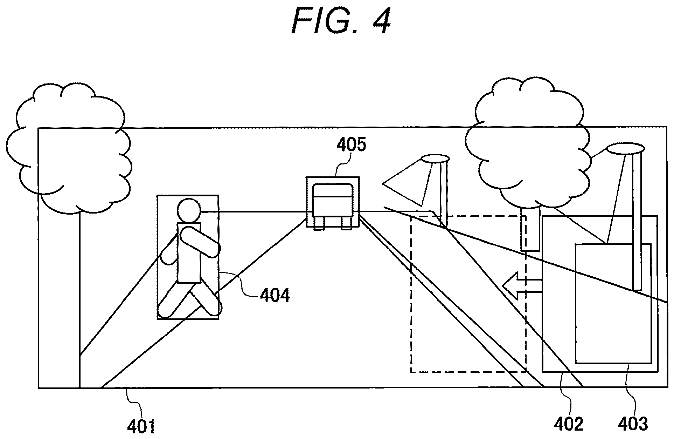

FIG. 4 is a view showing a result of the three-dimensional object detected in the three-dimensional object detection processing (S3) illustrated in FIG. 2 on the basis of the camera image. Here, the three-dimensional object detection processing will be described in detail by taking the image 401 acquired from the stereo camera by the three-dimensional object detection unit 301 illustrated in FIG. 2 as an example.

When the three-dimensional object detection unit 301 detects the three-dimensional object appearing in the image 401, a plurality of windows 402, 403 having different sizes are set in the image 401. The windows 402, 403 are regions where the three-dimensional object identification unit 303 identifies whether or not the three-dimensional object is a pedestrian with respect to the three-dimensional object detected at each position in the image 401 by the three-dimensional object detection unit 301.

As described above, the distance to the three-dimensional object is determined by the parallax processing (S2) illustrated in FIG. 2. Therefore, the three-dimensional object detection unit 301 can accurately identify the three-dimensional objects at different distances by using the large-sized window 402 for the three-dimensional object near the own vehicle and using the small-sized window 403 for the three-dimensional object far from the own vehicle.

The three-dimensional object detection unit 301 slides the windows 402, 403 in the image 401, and performs three-dimensional object identification processing (scan processing) at each position where the window has been slid by a predetermined amount. When the three-dimensional object is detected, rectangular detection regions 404, 405 are shown at the detection points of the three-dimensional objects in the image 401.

The detection regions 404, 405 which are detection result of the three-dimensional object detection processing (S3) indicate regions where three-dimensional objects such as a pedestrian and a vehicle existing in a three-dimensional space are projected as regions on an image. The three-dimensional object identification unit 303 identifies whether or not the three-dimensional object is a pedestrian on the basis of the detection regions 404, 405, thereby reducing the processing cost.

Note that the detection regions 404, 405 may have a rectangular shape or an indefinite shape that is changed according to parallax or a distance. However, in order to facilitate handling by the computer in the three-dimensional object identification processing (S4), the detection regions are generally treated as rectangular shapes. Therefore, assuming that the three-dimensional object identification unit 303 identifies the three-dimensional object using the rectangular detection region 404, the following details of each processing will be described.

Next, conventional lateral speed calculation processing and calculation results will be described.

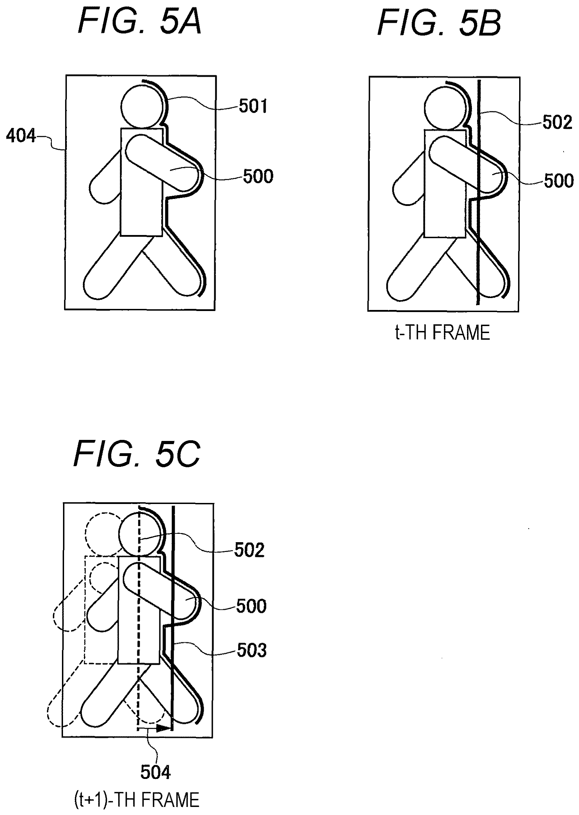

FIGS. 5A to 5C are diagrams illustrating examples of conventional speed calculation processing and calculation results. Pedestrian identification processing is performed on the basis of the detection region 404 calculated from the image 401 obtained from the stereo camera.

FIG. 5A is a diagram illustrating an example of a right edge 501 of a pedestrian 500 appearing in the detection region 404. When the identification result is the pedestrian 500, the processing proceeds to the lateral speed calculation processing (S15) illustrated in FIG. 3. The conventional arithmetic processing unit refers to the left and right edges of the pedestrian 500 in order to calculate the lateral speed of the pedestrian 500. In the following description, an example will be described with reference to the right edge 501 of the pedestrian 500. In the drawing, the right edge 501 is represented by a thick solid curve as a right contour of the pedestrian 500.

FIG. 5B is a diagram illustrating an example of a lateral position average 502 of the right edge 501 calculated from an image 401 of a t-th frame. For example, the conventional arithmetic processing unit acquires a lateral position of each pixel of the right edge 501 and obtains a lateral position average value thereof. The lateral position average value is represented as a lateral position average 502 by a thick solid line. As the lateral position average value, for example, the average value of the lateral positions in the detection region 404 is calculated on the basis of the lateral position coordinates of a plurality of pixels sampled from the right edge 501.

FIG. 5C is a diagram illustrating an example of a lateral position average 502 of the right edge 501 calculated from an image 401 of a (t+1)-th frame. Also in the (t+1)-th frame, the lateral position average 502 of the right edge 501 is obtained by the same processing as in the t-th frame illustrated in FIG. 5B. Here, when the pedestrian 500 is moving in the right direction, the movement amount 504 from the lateral position average 502 to the lateral position average 503 from the t-th frame to the (t+1)-th frame is calculated.

As described above, the conventional arithmetic processing unit calculates the lateral position average 502 of the previous frame and the lateral position average 502 of the current frame. Thereafter, the conventional arithmetic processing unit calculates the movement amount 504 of the lateral position average 502 for each frame, and calculates the lateral speed of the pedestrian 500 on the basis of the time between frames and the movement amount 504. It is found that the pedestrian 500 is moving at a higher speed in the moving direction of the lateral position average 502 as the movement amount 504 is larger.

Next, a conventional problem caused by obtaining the lateral position average will be described.

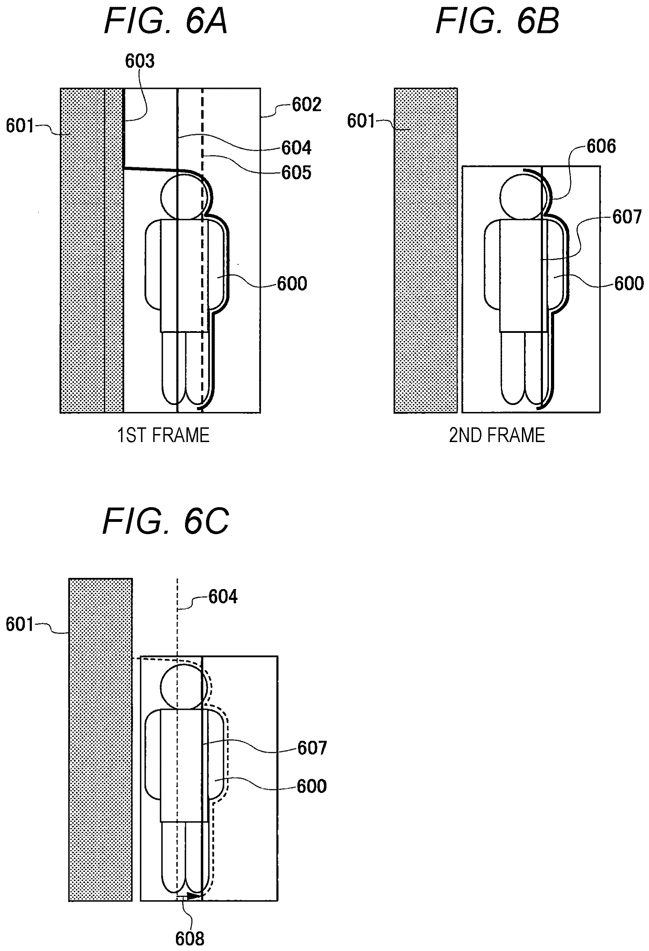

FIGS. 6A to 6C are diagrams illustrating examples of images captured in a state where the pedestrian 600 stands near a tall three-dimensional object such as a utility pole.

FIG. 6A is a diagram illustrating an example of a detection result in a case where a non-target object 601 exists near the pedestrian 600. An image captured in FIG. 6A is a first frame. In the three-dimensional object detection processing (S3) illustrated in FIG. 3, when a non-target object 601 other than a pedestrian which is the identification target, such as a utility pole or a sign, is present near the pedestrian 600, an event occurs in which the detection region 602 larger than the pedestrian 600 is erroneously detected. In this case, since the edge position 603 of the non-target object 601 is included in the detection region 602, noise is placed on the edge position of the pedestrian 600. Therefore, the lateral position average 604 indicated by a solid line is calculated at a position different from the ideal lateral position average 605 indicated by a broken line.

FIG. 6B is a diagram illustrating an example of a detection result of a second frame. The image captured in FIG. 6B is a second frame. In both the first frame and the second frame, the pedestrian 600 actually remains stopped. However, it is assumed that the non-target object 601 is not present in the detection region in the second frame due to forward movement of the vehicle or the like. In this case, only the edge 606 for the pedestrian 600 is calculated, and the edge 606 does not include the edge of the non-target object 601. Therefore, the conventional arithmetic processing unit calculates the lateral position average 607 for the edge 606.

FIG. 6C is a diagram illustrating an example of a movement amount of a lateral position average. The movement amount 608 of the lateral position average 607 calculated in the second frame is calculated to be larger than the lateral position average 604 calculated in the first frame. With this movement amount 608, the speed in the lateral direction is erroneously calculated to be large although the pedestrian 600 is stopped. As such a situation, for example, a situation is assumed in which a pedestrian and a utility pole appear to overlap at a certain timing while the own vehicle is turning by turning right or left, but the pedestrian and the utility pole do not appear to overlap at the next timing. In addition, a situation is assumed in which, when the pedestrian is at a far distance from the own vehicle, the pedestrian and the utility pole appear to overlap, but when the own vehicle approaches the pedestrian, the pedestrian and the utility pole overlap each other to be invisible.

As described above, in the conventional calculation processing of the movement amount, there is a problem that an erroneous determination is made that the standing pedestrian 600 existing outside the range on the own lane steps out into the own lane, leading to an erroneous alarm or erroneous braking. Therefore, even when the non-target object 601 exists in the detection region, it is necessary to correctly calculate the movement amount of the pedestrian.

Next, calculation processing of the movement amount according to the first embodiment will be described.

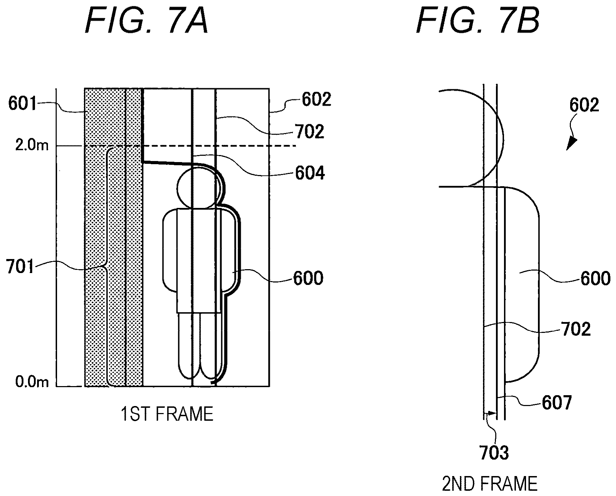

FIGS. 7A and 7B are diagrams illustrating an example of calculation processing of the movement amount according to the first embodiment. Also in FIGS. 7A and 7B, a case where the pedestrian 600 stands near a tall object such as a utility pole will be described.

The three-dimensional object detection unit 301 of the in-vehicle stereo camera device 100 according to the first embodiment first calculates the physical quantity of the three-dimensional object size from the detection region size and the distance on the image. Here, since the size of the three-dimensional object (particularly, the pedestrian) detected by the three-dimensional object detection unit 301 is unstable, as shown in FIG. 6A, even when the detection region 602 larger than the pedestrian 600 is detected, the lateral speed calculation unit 304 needs to suppress the calculation of the erroneous speed of the pedestrian 600. Therefore, two methods in which the lateral speed calculation unit 304 sets the sampling range of the edge used for the lateral speed using the size of the three-dimensional object will be described.

### (First Method of Setting Sampling Range of Edge)

First, a method (first method) of edge sampling using a previously assumed pedestrian size will be described with reference to FIGS. 7A and 7B.

FIG. 7A is an example of a detection region 602 including the pedestrian 600. FIG. 7A illustrates an example in which an image of a first frame is acquired.

It is assumed that since the pedestrian 600 was near the non-target object 601 (the utility pole or the like), the three-dimensional object detection unit 301 has detected the detection region 602 larger than the pedestrian 600. Therefore, the lateral speed calculation unit 304 refers to the physical quantity of the vertical width of the detection region 602, samples the edge in area 701 obtained by removing the portion of the predetermined value or more from the road surface, and calculates the lateral position average 702. The predetermined value of the height from the road surface is, for example, 2.0 m. Alternatively, the predetermined value of the height from the road surface may be, for example, 2.1 m or 2.2 m. The predetermined value of the height from the road surface is set on the basis of the height of a human. The movement information calculation unit (lateral speed calculation unit 304) sets the sampling range except for a region where a height from a road surface appearing in the image exceeds a predetermined value.

FIG. 7B is an enlarged view of the right side portion of the pedestrian 600 photographed in the second frame. FIG. 7B illustrates an example in which the image of the second frame is acquired.

The non-target object 601 does not exist in the detection region 602 of the image of the second frame. Therefore, as described with reference to FIG. 6B, the lateral speed calculation unit 304 calculates the lateral position average 607 only with the right edge of the pedestrian 600. As a result, the movement amount 703 from the lateral position average 702 calculated in the first frame to the lateral position average 607 calculated in the second frame is much smaller than the movement amount 608 calculated in FIG. 6C. As described above, since the three-dimensional object detected from the images of the plurality of frames is identified as the pedestrian 600, the lateral speed calculation unit 304 can accurately calculate the lateral speed of the pedestrian 600.

### (Second Method of Setting Sampling Range of Edge)

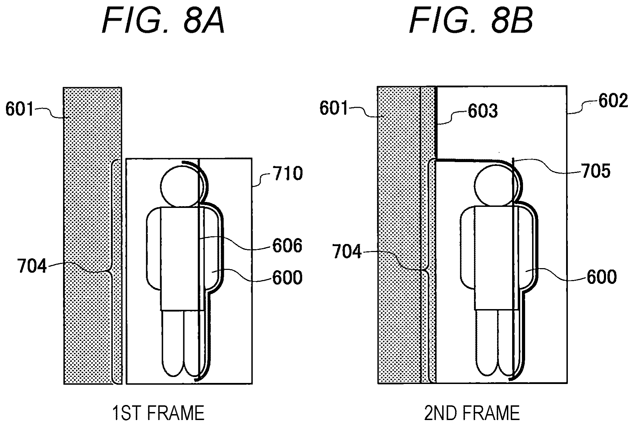

Next, a method (second method) of edge sampling using the identification result will be described with reference to FIGS. 8A and 8B.

FIG. 8A is a diagram illustrating an example of a detection region 710 including the pedestrian 600. FIG. 8A illustrates an example in which an image of the first frame is acquired.

The three-dimensional object identification unit 303 stores the identification result of the three-dimensional object identified in the first frame in the storage unit 106 in association with the three-dimensional object size calculated by the three-dimensional object size calculation unit 302 so that the three-dimensional object identification unit 303 can refer to the identification result in the processing of the next frame. Next, the three-dimensional object identification unit 303 calculates the identification score of the detection region 710 in the three-dimensional object identification processing (S41) of FIG. 3. For example, in a case where the minimum value of the identification score is set to 0 point and the maximum value is set to 100 points, as illustrated in FIG. 8A, when the detection region 710 having a large ratio including the pedestrian 600 which is the identification target is taken, a high identification score is assigned to the detection region 710.

If the detection processing of the identification target by the three-dimensional object detection unit 301 is stable, the identification accuracy of the identification target by the three-dimensional object identification unit 303 becomes high. For example, in a case where the identification score calculated in units of frames with respect to the detection region 710 is high, the detection processing of the identification target is stable. Therefore, it can be estimated that the three-dimensional object size calculated by the three-dimensional object size calculation unit 302 on the basis of the detection region 710 is also stable. In the image of the first frame illustrated in FIG. 8A, it is assumed that the identification score of the pedestrian 600 is high due to the stable detection region 710.

FIG. 8B is a diagram illustrating an example in which a detection region 602 larger than the identification target is acquired. FIG. 8B illustrates an example in which the image of the second frame is acquired.

For example, it is assumed that, since the setting of the detection region becomes unstable after the three-dimensional object detection unit 301 acquires the image of the first frame, the three-dimensional object detection unit 301 acquires the detection region 602 larger than the identification target (pedestrian 600) in the next frame. In this case, the edge position 603 of the non-target object 601 is included on the upper side of the detection region 602, and the margin portion other than the pedestrian 600 is larger than the detection region 710 illustrated in FIG. 8A. Therefore, the lateral speed calculation unit 304 cannot calculate a lateral position average desired as an edge of the pedestrian 600.

Therefore, the movement information calculation unit (lateral speed calculation unit 304) sets the sampling range on the basis of an identification result indicating that the three-dimensional object is the identification target and the size of the three-dimensional object calculated in the image of the frame for which the identification result is obtained. For example, the lateral speed calculation unit 304 sets the three-dimensional object size 704 in the detection region 710 of the first frame in which the identification score is determined to be high in the image of FIG. 8A as the sampling range of the edge used for the horizontal speed calculation in the second frame of the next frame. By calculating the lateral position average 705 in the sampling range set on the basis of the three-dimensional object size 704, the lateral speed calculation unit 304 can suppress the movement amount of the pedestrian 600 from being calculated to be larger than the actual movement amount.

In the second method, since the identification score is used, for example, even if the detection processing becomes unstable and the large detection region 602 is obtained in the image of the second frame, the edge of the three-dimensional object can be sampled using the sampling range set on the basis of the detection region 710 having the high identification score in the image of the first frame.

In the second method, the predetermined amount from the road surface described in the first method is not set. Therefore, the height of the detection region 710 having a high identification score is variable, and may be 1.5 m or 1.8 m. However, since it is not necessary to set the predetermined amount from the road surface in advance, versatility is enhanced as compared with the first method.

According to the first or second method described above, the lateral speed calculation unit 304 can suppress an increase in the movement amount 703 of the lateral position average, and can prevent erroneous speed calculation for the stopped pedestrian 600.

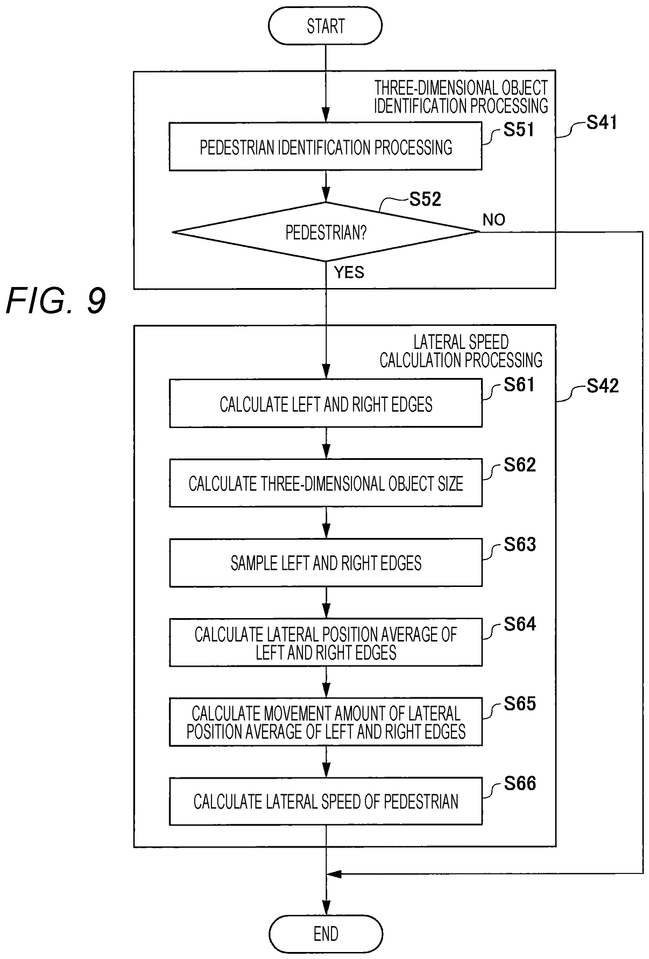

FIG. 9 is a flowchart illustrating an example of detailed processing of the three-dimensional object identification processing (S4) of FIG. 2.

First, the three-dimensional object identification unit 303 performs a pedestrian identification processing on the detection region obtained in the three-dimensional object detection processing (S3) in the three-dimensional object identification processing (S41) illustrated in FIG. 3 (S51). In the pedestrian identification processing, the three-dimensional object identification unit 303 determines whether or not the three-dimensional object detected in the detection region is a pedestrian on the basis of the identification results of the plurality of frames (S52). When determining that the identification target is not a pedestrian (NO in S52), the three-dimensional object identification unit 303 ends this processing.

On the other hand, when determining that the identification target is a pedestrian (YES in S52), the three-dimensional object identification unit 303 proceeds to the lateral speed calculation processing (S42). In the lateral speed calculation processing (S42), the lateral speed calculation unit 304 calculates the left and right edges of the pedestrian (S61).

Next, the lateral speed calculation unit 304 calculates a three-dimensional object size of the pedestrian, which is a three-dimensional object (S62). In the processing of calculating the three-dimensional object size, the lateral speed calculation unit 304 calculates the physical quantity (For example, height) of the three-dimensional object size on the basis of the detection region and the distance on the image. Note that the three-dimensional object size calculated in step S62 is the size of the pedestrian, but the three-dimensional object size calculated by the three-dimensional object size calculation unit 302 illustrated in FIG. 2 is the size of the three-dimensional object that cannot be identified as a pedestrian. Instead of calculating the three-dimensional object size in step S62, the lateral speed calculation unit 304 may acquire the three-dimensional object size calculated in step S33 of FIG. 3 from the three-dimensional object size calculation unit 302.

Next, the lateral speed calculation unit 304 samples the left and right edges of the three-dimensional object using the three-dimensional object size calculated in step S62 (S63). Next, lateral speed calculation unit 304 calculates a lateral position average of the sampled left and right edges (S64).

Next, the lateral speed calculation unit 304 calculates the movement amount of the lateral position average of the left and right edges in the current frame on the basis of the lateral position average of the left and right edges calculated in the past frame and the lateral position average of the left and right edges in the current frame (S65). Finally, the lateral speed calculation unit 304 calculates the lateral speed of the pedestrian (S66), and ends this processing.

### <Hardware Configuration Example of Computer>

Next, a hardware configuration of the computer 800 constituting each device of the in-vehicle stereo camera device 100 will be described.

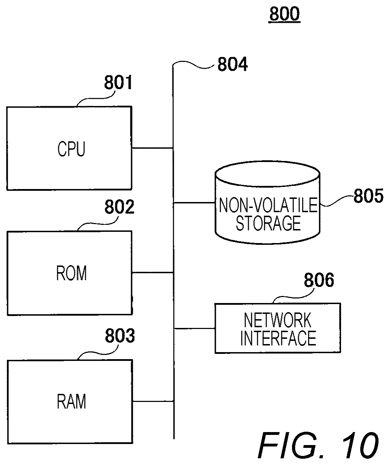

FIG. 10 is a block diagram illustrating a hardware configuration example of the computer 800. The computer 800 is an example of hardware used as a computer operable as the in-vehicle stereo camera device 100 according to the present embodiment. In the in-vehicle stereo camera device 100 according to the present embodiment, the computer 800 (computer) executes a program to implement various processing performed by the functional blocks illustrated in FIGS. 1 and 2 in cooperation with each other.

The computer 800 includes a central processing unit (CPU) 801, a read only memory (ROM) 802, and a random access memory (RAM) 803 each connected to a bus 804. The computer 800 further includes a nonvolatile storage 805 and a network interface 806.

The CPU 801 reads a program code of software for realizing each function according to the present embodiment from the ROM802, loads the program code into the RAM 803, and executes the program code. Variables, parameters, and the like generated during arithmetic processing of the CPU 801 are temporarily written to the RAM 803, and these variables, parameters, and the like are appropriately read by the CPU 801. However, a micro processing unit (MPU) or a graphics processing unit (GPU) may be used instead of the CPU 801, or the CPU 801 and a graphics processing unit (GPU) may be used in combination.

As the nonvolatile storage 805, for example, a hard disk drive (HDD), a solid state drive (SSD), a flexible disk, an optical disk, a magneto-optical disk, a CD-ROM, a CD-R, a magnetic tape, a nonvolatile memory, or the like is used. In addition to an operating system (OS) and various parameters, a program for causing the computer 800 to function is recorded in the nonvolatile storage 805. The ROM802 and the nonvolatile storage 805 record programs, data, and the like necessary for the operation of the CPU 801, and are used as an example of a non-transitory computer-readable storage medium storing a program to be executed by the computer 800.

For example, a network interface card (NIC) or the like is used as the network interface 806, and various data can be transmitted and received between devices via a local area network (LAN), a dedicated line, or the like connected to a terminal of the NIC.

In a case where the stereo camera is used as a sensor that detects external information, the in-vehicle stereo camera device 100 according to the first embodiment described above calculates parallax information from an image captured by the stereo camera and acquires an image of a three-dimensional object. Thereafter, when the three-dimensional object identified from the image is identified as a pedestrian, the in-vehicle stereo camera device 100 calculates the left and right edges of the pedestrian and calculates the three-dimensional object size on the basis of the left and right edges. Here, when it is identified that the three-dimensional object is a pedestrian, by setting the sampling range on the basis of the three-dimensional object size, the edge of the non-target object close to the pedestrian in the image is not sampled. As a result, even when the detection of the three-dimensional object which is the identification target is unstable, the lateral speed with high accuracy can be calculated. In addition, since the accuracy of calculating the lateral speed is improved, the accuracy of the alarm or brake control for avoiding the collision of the own vehicle with the three-dimensional object is improved, leading to safety assistance for the driver and the pedestrian.

Furthermore, whether or not the three-dimensional object is an identification target is identified on the basis of the images captured in the plurality of frames. Therefore, even if the three-dimensional object is captured near the non-target object in the image of the past frame, the three-dimensional object identification unit 303 can accurately identify that the three-dimensional object is the identification target when the three-dimensional object is captured away from the non-target object in the image of the subsequent frame.

In the first method, the height from the road surface appearing in the image is set to the average height of the pedestrian which is the identification target, so that the sampling range is set except for the region exceeding the height from the road surface. Therefore, the lateral speed calculation unit 304 can prevent the situation where the value of the lateral position calculated on the basis of the non-target object higher than the identification target is included in the value of the lateral position average due to sampling of the non-target object higher than the identification target.

In the second method, an identification result indicating that the three-dimensional object is an identification target is represented as an identification score. It is found that the detection processing of the identification target is more stable as the identification score is higher. Therefore, the three-dimensional object size calculated on the basis of the detection region having the high identification score is also stabilized, and the sampling range is set on the basis of the three-dimensional object size.

Note that the in-vehicle stereo camera device 100 according to the present embodiment can accurately calculate the movement of the pedestrian even when the pedestrian is walking in a place other than the crosswalk.

In the embodiment described above, the identification target is a pedestrian. However, in addition to the pedestrian, at least one of a person riding a bicycle, a person riding a motorcycle, and a person riding a personal mobility vehicle may be the identification target.

In the above embodiment, the example in which the lateral speed calculation unit 304 uniformly samples one of the left and right edges of the pedestrian 600 has been described, but the sampled information may be weighted. For example, when the pedestrian 600 is moving, since the lower body has a larger movement amount than the upper body, an error is likely to occur in the lateral position average due to the movement of the lower body. Therefore, the lateral speed calculation unit 304 can accurately obtain the lateral position average of the pedestrian 600 by weighting the sampled information of the upper body of the pedestrian 600 more than the lower body.

### [Second Embodiment]

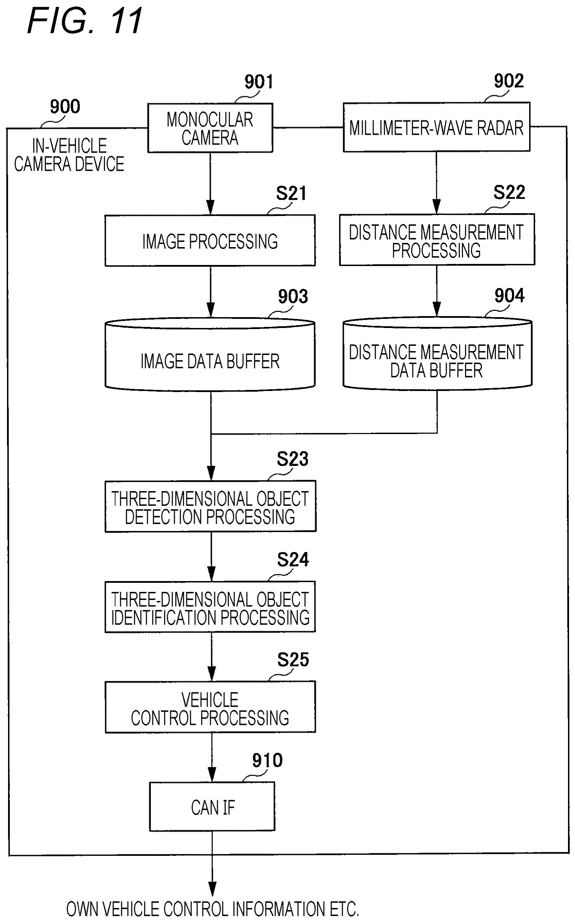

Next, a configuration example of an in-vehicle camera device according to a second embodiment of the present invention will be described with reference to FIG. 11. The in-vehicle camera device according to the second embodiment is configured to use a monocular camera and a millimeter-wave radar as sensors instead of using the stereo camera used in the first embodiment as a sensor.

FIG. 11 is a block diagram illustrating a configuration example of the in-vehicle camera device 900.

The in-vehicle camera device 900 includes a monocular camera 901, a millimeter-wave radar 902, an image data buffer 903, a distance measurement data buffer 904, and a CAN interface 910. The in-vehicle camera device 900 has functional blocks similar to those of the in-vehicle stereo camera device 100 illustrated in FIG. 1. Therefore, the monocular camera 901 is connected to the image input interface 103 (see FIG. 1), and the image data input through the image input interface 103 is stored in the storage unit 106 via the internal bus 109. In addition, an input interface (not illustrated) of the millimeter-wave radar 902 is provided, and data output from the millimeter-wave radar 902 is input through the input interface and stored in the storage unit 106 via the internal bus 109.

The monocular camera (monocular camera 901) is an example of an imaging unit including one imaging element, and captures an environment in front of the vehicle. The image processing unit 104 performs image processing (S21) on the image data of the image captured by the monocular camera 901. The contents of the image processing (S21) are similar to those of the image processing (S1) illustrated in FIG. 2. The image data after the image processing is buffered in the image data buffer 903 provided in the storage unit 106. Note that, unlike the first embodiment described above, since the imaging unit is not configured as a stereo camera, the in-vehicle camera device 900 according to the second embodiment does not perform the parallax processing (S2) illustrated in FIG. 2.

A distance measurement unit (millimeter-wave radar 902) measures a distance to a three-dimensional object. For example, the millimeter-wave radar 902 irradiates the front of the vehicle with a millimeter-waveband radio wave, and measures a distance to an object reflecting the radio wave, a speed of the object, and the like. The arithmetic processing unit 105 performs distance measurement processing (S22) on the data output from the millimeter-wave radar 902. The processed distance measurement data is buffered in the distance measurement data buffer 904 provided in the storage unit 106.

Thereafter, a three-dimensional object detection processing (S23) is performed using the image data read from the image data buffer 903 and the distance measurement data read from the distance measurement data buffer 904. The three-dimensional object detection processing (S23) corresponds to the three-dimensional object detection processing (S3) illustrated in FIG. 2, and the detection regions 404, 405 illustrated in FIG. 4 are switched and used according to the distance measurement data, and the three-dimensional object is detected.

The three-dimensional object identification processing (S24) and the vehicle control processing (S25) after the three-dimensional object detection processing (S23) correspond to the three-dimensional object identification processing (S4) and the vehicle control processing (S5) illustrated in FIGS. 2 and 3. For example, the three-dimensional object detection unit (three-dimensional object detection unit 301) detects the three-dimensional object at a specific distance on the basis of an image input from the imaging element. The three-dimensional object identification unit (three-dimensional object identification unit 303) identifies the detected three-dimensional object. In the three-dimensional object size calculating processing (S33) of the three-dimensional object detection processing (S3) illustrated in FIG. 3, the three-dimensional object size calculation unit 302 can calculate the three-dimensional object size on the basis of the image obtained from the monocular camera 901, the distance obtained by the millimeter-wave radar 902, and the detection size.

The CAN interface 910 outputs the information output from the in-vehicle camera device 900 to a control system (not illustrated) of the own vehicle via the in-vehicle network CAN 110 illustrated in FIG. 1.

In addition to the monocular camera 901 and the millimeter-wave radar 902, the present invention can also be applied to a device including a sensor capable of simultaneously measuring an image and a distance.

Also in the in-vehicle camera device 900 according to the second embodiment described above, similarly to the in-vehicle stereo camera device 100 according to the first embodiment, when the three-dimensional object detected in the image is identified as the pedestrian which is the identification target, the lateral speed can be calculated using the first method and the second method described above. Therefore, even if there is a non-target object such as a tall electric pole near the pedestrian, the lateral speed of the pedestrian can be accurately calculated.

Note that the present invention is not limited to the above-described embodiments, and it goes without saying that various other application examples and modifications can be taken without departing from the gist of the present invention described in the claims.

For example, in the above-described embodiments, the configuration of the environment recognition device has been described in detail and specifically for easy understanding of the present invention, and the embodiments are not necessarily limited to those having all the described configurations. Further, a part of the configuration of the embodiment described herein can be replaced with the configuration of the other embodiment, and the configuration of the other embodiment can be added to the configuration of one embodiment. In addition, it is possible to add, delete, and replace other configurations for a part of the configuration of each embodiment.

In addition, the control lines and the information lines indicate what is considered to be necessary for the description, and do not necessarily indicate all the control lines and the information lines on the product. In practice, it may be considered that almost all the configurations are connected to each other.

### Reference Signs List

- 100: in-vehicle stereo camera device
- 101: left camera
- 102: right camera
- 103: image input interface
- 104: image processing unit
- 105: arithmetic processing unit
- 106: storage unit
- 108: control processing unit
- 109: internal bus
- 110: in-vehicle network CAN
- 203: image data buffer
- 301: three-dimensional object detection unit
- 302: three-dimensional object size calculation unit
- 303: three-dimensional object identification unit
- 304: lateral speed calculation unit

## Claims

1. An environment recognition device comprising:
a three-dimensional object detection unit that sets a detection region for detecting an identification target for an image captured by an imaging unit, and detects a three-dimensional object appearing in the image on a basis of the detection region;
a three-dimensional object size calculation unit that calculates the size of the three-dimensional object detected in the detection region using information on a distance from the own device to the three-dimensional object calculated from the image;
a three-dimensional object identification unit that identifies that the three-dimensional object detected in the detection region is the identification target; and
a movement information calculation unit that limits a sampling range of the three-dimensional object on a basis of the size of the three-dimensional object, and calculates movement information indicating that the three-dimensional object, which is the identification target, moves in a lateral direction on a basis of information on an edge of the three-dimensional object, which is the identification target.

2. The environment recognition device according to claim 1, wherein
the three-dimensional object identification unit identifies that the three-dimensional object is the identification target on a basis of the images of a plurality of consecutive frames, and
the movement information calculation unit calculates, as the information on the edge for each of the frames, an average value of horizontal coordinates of points obtained by sampling an edge of the three-dimensional object, and calculates, as the movement information, a speed of the three-dimensional object, which is the identification target, in a lateral direction.

3. The environment recognition device according to claim 2, wherein
the movement information calculation unit sets the sampling range except for a region where a height from a road surface appearing in the image exceeds a predetermined value.

4. The environment recognition device according to claim 2, wherein
the movement information calculation unit sets the sampling range on a basis of an identification result indicating that the three-dimensional object is the identification target and the size of the three-dimensional object calculated in the image of the frame for which the identification result is obtained.

5. The environment recognition device according to claim 3, wherein
the movement information calculation unit samples one of left and right edges of the three-dimensional object and calculates an average value of horizontal coordinates of points obtained by sampling the edges.

6. The environment recognition device according to claim 5, wherein
the imaging unit is a stereo camera including two imaging elements, and comprises an image processing unit that calculates a parallax of the three-dimensional object on a basis of an image input from each of the imaging elements,
the three-dimensional object detection unit detects the three-dimensional object having the same distance from a vehicle on which the own device and the stereo camera are mounted to the three-dimensional object, and
the three-dimensional object identification unit identifies the three-dimensional object having the same distance.

7. The environment recognition device according to claim 5, wherein
the imaging unit is a monocular camera including one imaging element, and comprises a distance measurement unit that measures a distance to the three-dimensional object,
the three-dimensional object detection unit detects the three-dimensional object at a specific distance on a basis of an image input from the imaging element, and
the three-dimensional object identification unit identifies the detected three-dimensional object.

8. The environment recognition device according to claim 5, wherein
the three-dimensional object which is the identification target is at least one of a pedestrian, a person riding a bicycle, a person riding a motorcycle, and a person riding a personal mobility vehicle.

9. The environment recognition device according to claim 5, wherein
the lateral direction is a direction in which a pedestrian goes across in front of a vehicle on which the own device is mounted or across an own lane on which the vehicle travels.

10. An environment recognition method comprising:
a step of setting a detection region for detecting an identification target for an image captured by an imaging unit, and detecting a three-dimensional object appearing in the image on a basis of the detection region;
a step of calculating the size of the three-dimensional object detected in the detection region using information on a distance from the own device to the three-dimensional object calculated from the image;
a step of identifying that the three-dimensional object detected in the detection region is the identification target; and
a step of limiting a sampling range of the three-dimensional object on a basis of the size of the three-dimensional object, and calculating movement information indicating that the three-dimensional object, which is the identification target, moves in a lateral direction on a basis of information on an edge of the three-dimensional object, which is the identification target.
